# EUROPÄISCHE PATENTANMELDUNG

(11) **EP 0 868 009 A1**
(43) Veröffentlichungstag der Anmeldung: **30.09.1998**
(21) Anmeldenummer: 97122372.2
(22) Anmeldetag: 18.12.1997
(51) Int. Cl.: H02K 7/08, H02K 5/167, H02K 15/00

(54) **Aggregat mit einem Elektromotor und einem Schneckengetriebe**

(30) Priorität: 25.03.1997 DE 19712361
(71) Anmelder: ROBERT BOSCH GMBH, 70442 Stuttgart (DE)
(72) Erfinder: Krauth, Marco, 76547 Sinzheim (DE)

(57) **Zusammenfassung**

Aggregate mit Gehäusen, in denen je ein Elektromotor und ein dem Elektromotor nachgeordnetes Schneckengetriebe angeordnet sind, weisen beidendig der Schneckenwelle Axiallager auf, von denen üblicherweise wenigstens eines einstellbar ist, um Axialspiel auf ein gewollt kleines Maß zu vermindern oder zu beseitigen oder um wenigstens ein federndes Mittel eines Axiallagers zu spannen.

Hierfür schlägt die Erfindung vor, einen Boden (19) eines Gehäusebestandteiles wie Fortsatz (21) aus einem plastisch verformbaren Werkstoff herzustellen und eine Zone des Bodens (19) als einen Bestandteil eines justierbaren Axiallagers zu verwenden, indem ein Teil des Bodens (19) plastisch in Richtung der Schneckenwelle (16) verformt wird. Hierfür wird ein Dorn (40) in axialer Ausrichtung zur Schneckenwelle (16) gegen den Boden (19) geführt.

## Beschreibung

### Stand der Technik

Die Erfindung geht aus von einem Aggregat nach der Gattung des Patentanspruches.

Ein durch die Druckschrift EP 0 655 358 A1 bekanntes Aggregat hat in einem Gehäuse ein Schneckenrad und eine Schneckenwelle und zu deren Lagerung zwei Radiallager und zwei Axiallager. Zwischen den beiden Radiallagern bildet die Schneckenwelle eine Ankerwelle des Elektromotors. Ein elektromotorseitiges Ende des Gehäuses hat einen topfähnlichen Fortsatz mit einem Boden und enthält eines der beiden Axiallager und wenigstens einen Teil eines Radiallagers. Beide Axiallager besitzen je eine Anlaufscheibe, gegen die jeweils ein Ende der Schneckenwelle ausgerichtet ist. Zwischen die Anlaufscheiben und das Gehäuse bzw. den Boden des topfähnlichen Fortsatzes sind Federmittel eingebaut, die die Anlaufscheiben gegen die Enden der Schneckenwelle drücken, gleichgültig, ob die Enden der Schneckenwelle unmittelbar an den Anlaufscheiben anlaufen oder an wenigstens einem Ende der Schneckenwelle ein beispielsweise pilzförmiges Anlaufelement angeordnet ist. Das Maß der Andrückung ist beispielsweise wählbar durch Auswahl der Dicke bzw. der sich in axialer Richtung der Schneckenwelle erstreckenden Abmessung der Scheibe. Je dicker die Scheibe ist, desto größer wird die Andrückung ausfallen. Üblich ist es, aus einem Vorrat mit unterschiedlich dicken Scheiben eine solche auszuwählen, daß die gewünschte Andrückung zustandekommt und dabei herstellungsbedingte Toleranzen von an der axialen Lagerung der Schneckenwelle beteiligten Bauelementen kompensiert sind.

Ein durch die Druckschrift EP 0 133 527 A1 bekanntes Aggregat besitzt benachbart zum Schneckenrad und dabei in Ausrichtung zu einem diesem Schneckenrad zugeordneten Ende der Schneckenwelle in das Gehäuse geformte Taschen, in die quer zur Verlängerung der Längsachse der Schneckenwelle eine Scheibe einsteckbar ist, die eine gegen das Ende der Schneckenwelle gerichtete Warze aufweist. Die axiale Länge der Warze bestimmt die Größe des Axialspiels der Schneckenwelle. Die Warze wird hergestellt nach dem Einbauen der Schneckenwelle und dem Vermessen des Endes der Schneckenwelle relativ zu den Taschen entsprechend dem Vermessungsergebnis mittels einer Prägevorrichtung an einer dem Meßplatz zugeordneten Arbeitsstation.

### Vorteile der Erfindung

Das Aggregat mit den kennzeichnenden Merkmalen des Anspruches 1 ergibt den Vorteil, daß vor dem Einstellen eines Axiallagers alle Lagerstellen des Aggregates komplett zusammenbaubar sind und daß ein ohnehin am Gehäuse vorhandener Fortsatz die Einstellbarkeit des Axiallagers ergibt. Daraus ergibt sich der Vorteil, daß das Axialspiel ohne verlierbare Bauteile in preisgünstiger Weise einstellbar ist auf einen kleinen Wert oder aber statt eines Axialspiels eine axiale Vorspannung einstellbar ist und daß gegebenenfalls nach einem Probelauf unter Belastung ein Nachstellen möglich ist.

Die kennzeichnenden Verfahrensmerkmale des Anspruchs 2 ergeben ebenfalls den Vorteil, daß ein Axiallager in preisgünstiger Weise ohne den Aufwand von zusätzlichen Bauteilen oder aus einem Vorrat auszusuchenden Bauteilen möglich ist. Beispielsweise kann anläßlich des Verstellens des Axiallagers dem Elektromotor eine elektrische Spannung zugeführt werden und bei einer fortlaufenden Verminderung des Axialspieles ein Anstieg der Stromstärke oder die Drehzahl des Elektromotors beobachtet werden. Beim Erreichen einer vorbestimmten Schwelle wird dann das Verstellen des Axiallagers beendet. Im Prinzip kann das Verstellen von Hand mittels einer Spindelpresse oder auch automatisiert vorgenommen werden.

### Zeichnung

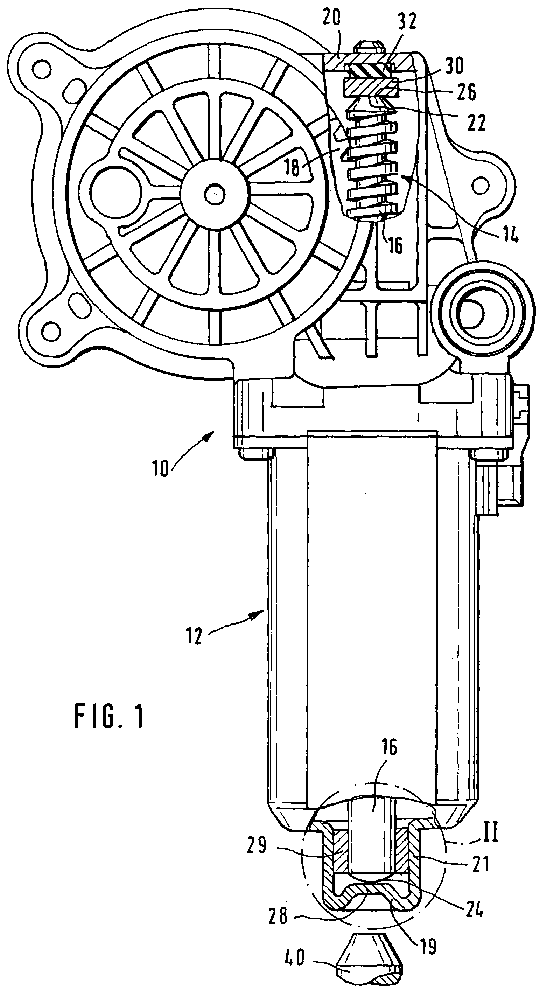

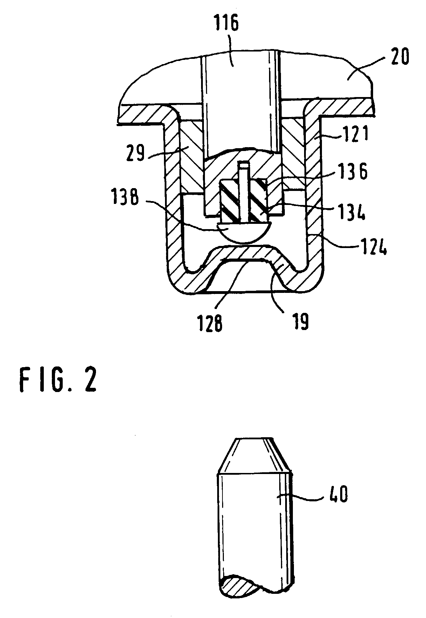

Zwei Ausführungsbeispiele sind in der Zeichnung dargestellt und nachfolgend näher beschrieben. Die Figur 1 zeigt das erfindungsgemäße Aggregat mit einer im Bereich einer Schneckenwelle aufgeschnittenen Ansicht, und die Figur 2 zeigt eine alternative Ausbildung eines Axiallagers für das Ausführungsbeispiel der Figur 1.

### Beschreibung der Ausführungsbeispiele

Ein in der Figur 1 dargestelltes Aggregat dient beispielsweise zum Verstellen einer in einem Kraftfahrzeug angeordneten Fensterscheibe. Es weist deshalb einen drehrichtungsumkehrbaren Elektromotor 12 auf, dem ein als Schneckengetriebe 14 ausgebildetes Untersetzungsgetriebe nachgeordnet ist. Das Schneckengetriebe 14 hat eine Schneckenwelle 16 und ein Schneckenrad 18, das hier über eine nicht dargestellte Abtriebswelle mit einem Fensterhebermechanismus wirkverbunden ist. Die Schneckenwelle 16 bildet mit einem nicht sichtbaren mittleren Abschnitt eine Ankerwelle des Elektromotors 12. Das Aggregat 10 weist ein Gehäuse 20 auf, das sowohl den Elektromotor 12 als auch das Schneckengetriebe 14 umschließt. Die Schneckenwelle 16 ist zwischen zwei in Richtung ihrer Drehachse gesehen einander zugewandten und dabei mit Abstand voneinander angeordneten Schultern 22 und 24 angeordnet, die ihrerseits an dem Gehäuse 20 beispielsweise mittelbar abgestützt sind. Den Schultern 22 und 24 sind Gegenschultern 26, 28 der Schneckenwelle 16 zugeordnet. Beim Ausführungsbeispiel gemäß der Figur 1 sind diese Gegenschultern durch die balligen stirnseitigen Enden der Schneckenwelle 16 selbst gebildet. Wie die Figur 1 weiter zeigt, befindet sich in Richtung der Drehachse der Schneckenwelle 16 gesehen zwischen der als Anlaufscheibe 30 ausgebildeten Schulter 22 und dem Gehäuse 20 ein Federmittel 32, das in diesem Ausführungsbeispiel durch eine Scheibe aus elastischem Material gebildet ist. Die andere Schulter 24 ist mittels eines Bodens 19 an einem von dem Gehäuse 20 ausgehenden Fortsatz 21 abgestützt.

Die Elemente 22 bzw. 30 und 26 sowie 32 einerseits und 24 sowie 28 andererseits bilden zwei Axiallager für die Schneckenwelle 16.

Das an die ballige Gegenschulter 28 angrenzende Ende der Schneckenwelle 16 ist drehbar in einer Lagerbuchse 29 gelagert. Die Lagerbuchse 29 ist beispielsweise fixiert durch Einpressen in den topfähnlichen Fortsatz 21 des Gehäuses 20 des Elektromotors 12.

Bei einer anderen, in der Figur 2 dargestellten Ausführungsform des Aggregats sind die federnden Mittel 134 in einer stirnseitigen Ausnehmung 136 der Schneckenwelle 116 angeordnet. Auf der dem Gehäuse 20 zugewandten Seite ist an dem aus elastischem Material bestehenden blockartigen Federmittel 134 ein im wesentlichen pilzähnliches Anlaufelement 138 angeordnet, über das die Schneckenwelle 116 mittels ihrer Schulter 124, die von einer Oberfläche des Anlaufelementes 138 gebildet wird, an einer Schulter 124 anlauft. Die Schulter 124 ist wiederum gebildet von einem Boden 19 eines von dem Gehäuse 20 ausgehenden topfähnlichen Fortsatzes 121. Wiederum ist die Schneckenwelle 116 im Bereich der Gegenschulter 128 drehbar gelagert in einer Lagerbuchse 29, die in dem Fortsatz 121 gehalten ist.

Bei den beschriebenen Ausführungsformen gemäß den Figuren 1 und 2 wird darauf geachtet, daß die Federmittel 32 und 134 genügend Freiraum haben, in den hinein sie sich jeweils bei betriebsbedingter Belastung elastisch verformen können. Eine anfängliche Verformung vor Betriebsbeginn ist wählbar durch Einstellen des jeweiligen Axiallagers, das in dem jeweiligen Fortsatz 21 bzw. 121 angeordnet ist.

Die erfindungswesentlichen Bestandteile der einstellbaren Axiallager sind geformt aus den Böden 19 der Fortsätze 21 bzw. 121. Im Ursprungszustand, also vor dem Einbau der Lagerbuchsen 29 in die Fortsätze 21 bzw. 121 sind diese Boden 19 ebenflächig ausgebildet. Nach dem Zusammenfügen aller Einzelteile des Aggregates haben deshalb die zunächst ebenen Böden dann, wenn die Aggregate mit den Schneckengetrieben 14 nach unten und den Elektromotoren 12 und also auch den Fortsätzen 21 bzw. 121 nach oben in eine Meß- und Justiervorrichtung, die nicht gezeichnet ist, gestellt sind, axiale Abstände zu den Enden der Schneckenwellen 16 bzw. der Schulter 24 bzw. Schulter 124.

Zum Justieren kann man beispielsweise den Elektromotor mit einer elektrischen Spannung versorgen, wodurch der Elektromotor bei relativ geringer Stromstärke eine Enddrehzahl erreicht. Nun kann man mittels einer dem Justierplatz zugeordneten beispielsweise handbetätigten Presse, die nicht dargestellt ist, einen Dorn 40 als ein Drückwerkzeug gegen den jeweiligen noch ebenen Boden 19 bewegen und beim Drücken des Dorns 40 gegen den Boden 19 diesen verformen in Richtung der Schneckenwelle 16, so daß jeweils ein mittlerer Bereich des jeweiligen Bodens 19 eine warzenartige Schulter 24 bzw. 124 bildet, die dann jeweils auf die betreffende Gegenschulter 28 bzw. 128 trifft. Ab dem Moment des Auftreffens entsteht an der Auftreffstelle ein Bremsmoment, das einen gewissen Drehzahlabfall und dabei auch einen Anstieg des elektrischen Stromes, den der Elektromotor aufnimmt, verursacht, was zu beobachten ist. Durch wenige Versuche kann man ermitteln, zu welchem elektrischen Strom bzw. welchem Drehzahlabfall diejenige Axiallagereinstellung gehört, die man beispielsweise in diesen Ausführungsbeispielen zum Verspannen der Federmittel 32 bzw. 134 haben will. Im Falle, daß keine solchen Federmittel eingebaut sind, wird ebenfalls das Zuführen des Dornes gegen den jeweiligen Boden 19 beendet beispielsweise beim Erreichen eines vorbestimmten Grenzwertes des elektrischen Stromes. Hierbei wird, weil keine Federmittel vorgesehen sind, beim Wegbewegen des Dornes 40 von dem jeweiligen Boden 19 die Stromaufnahme des jeweiligen Elektromotors vermindert als Folge eines gewissen Zurückfederns des jeweiligen Bodens 9 in Richtung seiner ursprünglichen Gestalt, wobei fallweise, und dies kann durchaus beabsichtigt sein, sich die jeweilige Schulter 24 bzw. 124 etwas von der Schneckenwelle entfernt und dieserart ein gewolltes Axialspiel zustandekommt. Ein Maß dieses Axialspieles wird davon abhängen, ab welcher Werkstoffanstrengung im Boden 19 ein Fließen des Werkstoffes auftritt und wie hoch der Elastizitätsmodul des verwendeten Werkstoffes ist. Es kann auch eine Rolle spielen, ob man vor dem Verformen der Böden diese beispielsweise weich glüht, damit ein Fließen bzw. Verstrecken frühzeitig eintritt und ein Rückfedern dementsprechend gering ausfällt.

Der beschriebene Justiervorgang ist im Prinzip ein Justierverfahren, bei dem, wie dies beschrieben ist, dem Weglassen oder dem Einbau von federnden Mitteln in die Axiallager Rechnung getragen werden kann.

Falls in die Aggregate keine federnden Mittel eingebaut werden, dann könnte man den Meß- und Justierplatz so gestalten, daß die Aggregate in der in der Figur 1 dargestellten Ausrichtung, also mit den Fortsätzen 21 nach unten eingesetzt werden. Dann würde aufgrund des Eigengewichtes der jeweiligen Schneckenwelle 16 diese nach unten gegen den zunächst noch ebenen Boden 19 rutschen. Dann wurde zwischen dem oberen Ende der jeweiligen Schneckenwelle und einem beispielsweise fest mit dem Gehäuse 20 vereinigten als Schulter 22 dienenden Element zunächst ein Abstand vorhanden sein. Dieser könnte beispielsweise in an sich bekannter Weise optisch gemessen werden. Wenn man dann zunehmend kräftiger den Dorn 40 gegen den zunächst ebenen Boden 19 drückt, wird wieder eine Schulter 24 bzw. 124, die ihrer Gestalt nach eine Ähnlichkeit mit der Justierwarze des Standes der Technik aufweist, entstehen, wobei dann die jeweilige Schneckenwelle 16 angehoben wird gegen die Schulter 22. Dies hat zur Folge, daß der ursprüngliche Meßwert verschwindet, also schrumpft. Es kann das Bewegen des Dornes 40 gegen das Aggregat abgebrochen werden, sobald der optische Meßwert auf einen vorgewählten Schwellenwert abgesunken ist oder gerade am Verschwinden ist.

Aus der Beschreibung geht also hervor, daß ein ohnehin vorhandenes Bauteil aus plastisch verformbarem Werkstoff wie Stahl, das ohnehin an dem Gehäuse 20 des Aggregates vorgesehen ist, als ein Bauteil verwendet wird, das der gewollten Axialspielverringerung oder gar Axialspielbeseitigung dient, gleichgültig, wieviele Radiallager in das jeweilige Aggregat eingebaut sind und ob beide Axiallager steif oder axial elastisch ausgebildet sind.

## Patentansprüche

1. Aggregat mit einem Gehäuse und darin einem Elektromotor, mit einem dem Elektromotor nachgeordneten Schneckengetriebe, das ein Schneckenrad und eine Schneckenwelle und zwei Axiallager für die Schneckenwelle aufweist, wobei die Schneckenwelle eine Ankerwelle des Elektromotors bildet und wenigstens ein Axiallager sich innerhalb eines hohlen topfähnlichen Fortsatzes mit einem Boden befindet, dadurch gekennzeichnet, daß der Boden (19) aus einem plastisch verformbaren Werkstoff besteht und eine gegen die Schneckenwelle (16) gerichtete, im wesentlichen warzenförmige Verformung, die zur Schneckenwelle (16) hin eine Schulter (24, 124) eines Axiallagers bildet, aufweist, wobei die Verformung nach dem Einbau der Schneckenwelle (16) in das Gehäuse (20) in den Boden (19) geformt ist.

2. Verfahren zum Einstellen eines Axiallagers eines Aggregates, das in einem Gehäuse einen Elektromotor und ein diesem nachgeordnetes Schneckengetriebe mit einer Schneckenwelle und gegen die Schneckenwellenenden gerichtete Axiallager aufweist, wobei wenigstens ein Axiallager sich in einem Fortsatz, der einen Boden aufweist, befindet, dadurch gekennzeichnet, daß der aus einem plastisch verformbaren Werkstoff bestehende Boden (19) zu einer gegen die Schneckenwelle (16) gerichteten Schulter (24, 124) solange geformt wird, bis durch fortschreitendes Verformen das Axialspiel einen vorbestimmten Wert erreicht hat.
